# EUROPEAN PATENT SPECIFICATION

(11) **EP 2 990 319 B1**
(45) Date of publication and mention of the grant of the patent: **21.08.2019**
(21) Application number: 14724498.2
(22) Date of filing: 24.04.2014
(51) Int. Cl.: B62K 5/00, B60G 5/02, B62K 5/01, B62K 5/02, B62K 5/027, B62K 5/05, B62K 5/08

(54) **VEHICLE**
FAHRZEUG
VÉHICULE

(30) Priority: 24.04.2013 ES 201300382
(43) Date of publication of application: 02.03.2016
(73) Proprietor: Saracho Rotaeche, Luis Maria, 01006 Vitoria (ES)
(72) Inventor: Saracho Rotaeche, Luis Maria, 01006 Vitoria (ES)
(74) Representative: Cueto, Sénida
(86) International application number: PCT/ES2014/070363
(87) International publication number: WO 2014/174140

(56) References cited:
- EP-A1- 0 501 585
- GB-A- 2 161 435
- GB-A- 2 382 806

## Description

### Field of the Invention

The invention relates to a vehicle fitted with two or more longitudinally aligned steered wheels. In particular, the vehicle can be such that the rest of the vehicle wheels are longitudinally aligned with the steered wheels, so that all of the vehicle's wheels are in-line.

### Prior Art

Two-wheeled vehicles, such as, for example, bicycles or two-wheeled motorbikes, are vehicles that are widespread and extensively used in society. These vehicles present a general configuration that has not varied significantly over time due to its simplicity and efficacy. This general configuration essentially consists of a frame or a chassis on which a user positions him or herself, and with respect to which rotating front and rear wheels are positioned; the front wheel is connected to a user-operated steering system that allows the front wheel, also known as the steered wheel, to turn sideways.

In spite of only having two wheels, an experienced user is able to keep his/her balance on a moving two-wheeled vehicle thanks to certain physical phenomenon: on one hand, the vehicle's steered wheel or front wheel tends to turn slightly when the user tilts the vehicle, so that it is possible to perform stable turns at high speeds by tilting the vehicle; on the other hand, tilting the vehicle counteracts the centrifugal force experienced during the turn, contributing to stability. The fact that tilting the vehicle facilitates its turning and keeping one's balance is the essence of the unique experience of riding a two-wheeled vehicle.

However, the stability of a two-wheeled vehicle is limited. Any problem with the riding conditions, a slippery surface, a brusque movement, locking of the wheels whilst braking, etc. may produce sufficient instability to cause the user to fall off. This stability limitation is partially due to the fact that there are only two contact points with the ground and, if one of them fails, it is not possible to keep one's balance.

Therefore, as a more stable alternative to two-wheeled vehicles, three-wheeled vehicles or tricycles, and even four-wheeled single-seater vehicles, for example those commonly known as "quads" or "All-Terrain Vehicles" (ATVs), are known. Although more stable, it is clear that as a result of their configuration, these vehicles offer a completely different user experience than that of riding two-wheeled vehicles. In fact, riding two-wheeled vehicles is considered to be a totally different sport than handling three or four-wheeled vehicles.

In the prior art, there are few designs that seek to vary the general configuration of a two-wheeled vehicle to obtain a vehicle that offers the same user experience as a two-wheeled vehicle but with improved stability. An exemplary design that seeks this goal is described in British patent application no. GB2291630A, which shows a vehicle similar to a bicycle but fitted with two front wheels instead of one (the vehicle therefore being a tricycle), and in which the forks of both front wheels are joined by a bar so that they both rotate simultaneously when the user turns the handlebar. This design presents certain operating faults. For example, if the first front wheel (that located in a more forward position) hit a bump and were lifted up, the whole vehicle would turn upwards with respect to the rear wheel, and the second front wheel would lose contact with the ground. Similarly, when the bump reached the second front wheel, the contrary would occur, i.e. the first front wheel would stay in the air. As a result, the weight distribution on the wheels would vary in an uncontrolled and unstable manner.

Prior art document GB2161435 A, on which the preamble of independent claim 1 is based, teaches a non-articulated road vehicle having four wheels that are individually suspended by swing arms and shock absorbers. However, because the wheels swing independently from one another, the effects of the individually suspended wheels on improving suspension and braking are insufficient.

Prior art document EP0501585A1 teaches a four-wheeled agricultural vehicle whose width can be adjusted to adapt to different planting distances. The wheels are divided into two pairs of a front wheel and a rear wheel, wherein the pairs are carried by two respective longitudinal beams which are pivotably attached to a common horizontal transverse shaft.

An objective of the present invention is to obtain a vehicle whose load distribution is controlled and stable, increasing user safety and extending the vehicle's useful life.

Another objective of the invention is to obtain a vehicle whose user experience is identical or practically identical to the experience of riding a two-wheeled vehicle but with increased stability with respect to conventional two-wheeled vehicles. Fulfilling this objective will provide a vehicle that two-wheeled vehicle users can ride with equal enjoyment but with increased personal safety.

### Brief Description of the Invention

In accordance with the present invention there is provided a vehicle as set out in independent claim 1. Preferred embodiments of the present invention are laid down in the appended dependent claims.

Thanks to the fact that all steered wheels are capable of swivelling with respect to the frame, the vehicle as per the invention is capable of keeping all of the steered wheels in contact with the ground at all times. This boasts certain advantages.

A first advantage is that contact of all the steered wheels is maintained in unfavourable situations, significantly improving balance and safety in comparison with conventional two-wheeled vehicles. For example, contact of all the steered wheels is maintained when one of these steered wheels goes over a bump, or in general, when the steered wheels are crossing uneven ground. In fact, even if one of the front steered wheels lacks grip, the rest of the front steered wheels may remain in contact with the ground (in the case of conventional two-wheeled vehicles, fitted with one front wheel, when the grip of this front wheel fails, the user is practically certain to fall off). Furthermore, in the event of a puncture or a burst tyre, particularly of a front steered wheel, major instability does not occur.

Another advantage is that the vehicle's load in the front area is distributed between the front steered wheels regardless of the unevenness of the ground. This allows load distribution between the front steered wheels to be controlled so that brusque changes in this distribution do not occur. Furthermore, the front steered wheels and their related mechanisms do not need to fulfil such strict load requirements, thereby simplifying their design, extending the spectrum of mechanisms or materials that can be used in their manufacture, and in short, reducing the cost of the vehicle.

An additional advantage arises if the vehicle has front suspension, or in other words, if the vehicle has the mechanics to partly absorb the movement of the steered wheels due to ground unevenness, so that such movement is cushioned on transfer to the frame and subsequently to the rider. The advantage consists in that, in the vehicle as per the invention, the movement caused by unevenness is transferred gradually to the frame; hence, the movement that is transferred to the frame is approximately half the movements of each front wheel. Therefore, the rocker acts as an initial movement reducer prior to suspension. This leads to two interesting effects. On one hand, the vehicle may be fitted with a more robust suspension, if a more sportive riding experience is sought. On the other hand, in comparison to a conventional vehicle having the same suspension, the invention reduces the duration of a suspension (i.e. of the absorption of an unevenness); if, in this respect, it is taken into account that, for safety reasons, no braking or acceleration should take place on two-wheeled vehicles while the suspension is working as suspension moments are an unstable situation, it may be concluded that the invention makes driving more agile, rendering a more sportive riding experience.

The vehicle as per the invention is an intermediary concept between a conventional two-wheeled vehicle and a conventional three-wheeled vehicle provided with two steered wheels in parallel. The vehicle of the present invention is more stable, due to the fact that the vehicle as per the invention maintains the essence of using a two-wheeled vehicle (travelling on a vehicle that tilts) yet at the same time, offers increased stability.

### Brief Description of the Figures

The details of the invention can be seen in the accompanying figures, which do not intend to limit the scope of the invention:
- Figure 1 shows a schematic side elevation view of a first embodiment of a vehicle as per the invention.
- Figure 2 shows the vehicle of Figure 1, in a situation in which the steered wheels are going over a bump.
- Figure 3 shows a partial schematic side elevation view of a second embodiment of a vehicle as per the invention.

- Figure 4 shows a partial schematic side elevation view of a third embodiment of a vehicle as per the invention.
- Figure 5 shows a partial schematic side elevation view of a fourth embodiment of a vehicle which does not belong to the invention.
- Figure 6 shows a partial schematic side elevation view of a fifth embodiment of a vehicle which does not belong to the invention.
- Figure 7 shows a partial schematic side elevation view of a sixth embodiment of a vehicle as per the invention.
- Figure 8 shows a partial schematic side elevation view of a seventh embodiment of a vehicle as per the invention.
- Figure 9 shows a partial schematic side elevation view of an eighth embodiment of a vehicle as per the invention.
- Figure 10 shows a first perspective view of a ninth embodiment of a vehicle which does not belong to the invention.
- Figure 11 shows a second perspective view of the embodiment of Figure 10.
- Figure 12 shows a side elevation view of the embodiment of Figure 10, in a situation in which the steered wheels are leveled.
- Figure 13 shows a side elevation view of the embodiment of Figure 10, in a situation in which the front steered wheel is rolling over a bump.
- Figure 14 shows a side elevation view of the embodiment of Figure 10, in a situation in which the rear steered wheel is rolling over a bump.

### Detailed Description of the Invention

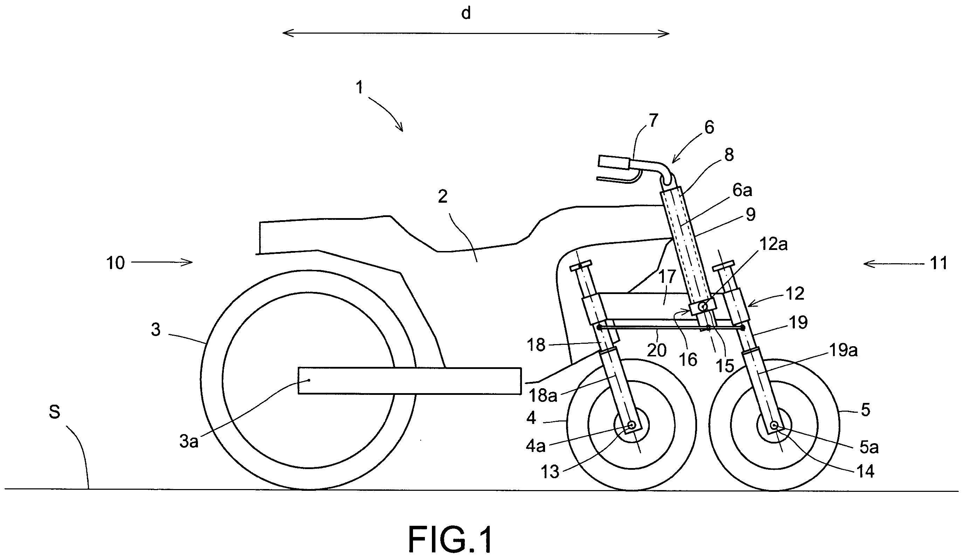

Figure 1 shows a schematic side view of a first embodiment of a vehicle as per the invention. The depicted vehicle (1) is a motorbike that comprises a frame (2) and three wheels - a rear wheel (3) and two front steered wheels (4, 5). The vehicle (1) is shown supported on a surface (S) or ground. All of the wheels (3, 4, 5) are able to rotate with respect to a respective central rotation axis (3a, 4a, 5a), in order to roll on the surface (S). The vehicle further comprises a handlebar set (6) to enable the user to turn to the left or right, which is made up of a handlebar (7) intended to be held by the user and a handlebar tube (8). The handlebar set (6) is able to turn with respect to a handlebar rotation axis (6a), for which the handlebar tube (8) is housed rotationally within a steering tube (9) comprised in the frame (2). The vehicle (1) is arranged along a longitudinal direction (d) which extends from a rear area (10) towards the front area (11) of the vehicle (1). In accordance with the invention, the steered wheels (4, 5) are longitudinally aligned, or in other words, are aligned along the longitudinal direction (d). Aligned is understood to mean that, when the handlebar set (6) is centred and has not been turned either to the left or to the right, the central points of each central rotation axis (4a, 5a) are arranged either aligned along longitudinal direction (d) or slightly unaligned. By "slightly unaligned" it is understood that the lateral distance between the central points does not exceed 10% of the longitudinal distance between the central points (distance between axles). In the construction method shown, the rear wheel (3) is also aligned with the steered wheels (4, 5).

The vehicle (1) as per the invention further comprises a rocker assembly (12) to which the steered wheels (4, 5) are connected by a respective articulated connection (13, 14) -which also provides the central rotation axis (4a, 5a) of the wheel-. The rocker assembly (12) is capable of swivelling with respect to the frame (2). In the embodiment shown, swivelling takes place with respect to a rocker rotation axis (12a) parallel to the central rotation axes (4a, 5a) of the steered wheels (4, 5); such an arrangement provides the set made up of the rocker assembly (12) and the steered wheels (4, 5) with a joint swivelling motion on a plane that is perpendicular to the central rotation axis (4a, 5a) of the steered wheels (4, 5). In this way, contact of the wheels with the surface (S) remains stable for any unevenness that this surface (S) may present. At the same time, steering is not affected by the movement of the rocker assembly (12).

The rocker rotation axis (12a) is provided by an articulated connection (15) between the rocker assembly (12) and the frame (2). For instance, in the present embodiment shown in the figure, the articulated connection (15) between the rocker assembly (12) and the frame (2) is carried out between the rocker assembly (12) and a lower end (16) of the steering tube (9) of the frame (2). The fact that the rocker rotation axis (12a) is provided by an articulated connection (15) between the rocker assembly (12) and the frame (2) is a relatively simple yet effective construction method. The articulated connection may be a ball bearing, a needle roller bearing or other applicable articulated connection that guarantees smooth rotation without backlash, whilst maintaining rigidity during rotation.

The rocker rotation axis (12a) intersects, as shown in the figure, with the handlebar rotation axis (6a). Intersect is understood to mean that both rotation axes (6a, 12a) are straight lines and present an intersection point. In the figure, the position of this intersection point coincides with the position of the rocker rotation axis (12a). The fact that the rocker rotation axis (12a) intersects the handlebar rotation axis (6a) is advantageous because on rotating the rocker assembly (12), the steered wheels (4, 5) do not receive parasite movements, or these can be reduced so that they are not appreciated.

As can be seen in the figure, the rocker assembly (12) comprises a body (17) to which two wheel connectors (18, 19) are connected; the connectors (18, 19) provide a support for connecting the wheels to the vehicle enabling fee rotation with respect to the central rotation axes (4a, 5a). In the embodiment shown, the wheel connectors (18, 19) are forks that embrace the wheels on both sides. However, different construction methods for the wheel connectors are contemplated, such as, for example, a lateral piece that is only connected to the wheel on one side. In accordance with the invention, the wheel connectors (18, 19) are able to rotate with respect to the body (17) in accordance with a respective connector rotation axis (18a, 19a) that is parallel to the handlebar rotation axis (6a). In other words, the rocker assembly (12) is a joint and unitary element insofar as its swivelling with respect to the frame(2) is concerned; however, internally to the rocker assembly (12), each steered wheel (4, 5) is separately rotatable with respect to its own rotation axes -the connector respective rotation axis (18a, 19a)-. This aspect ensures that on turning the handlebar set (6) all of the steered wheels (4, 5) maintain their grip to the surface (S) and no steered wheel (4, 5) slides sideways.

As shown in the figure, the rocker assembly (12) comprises a link (20) connected to the wheel connectors (18, 19), which synchronises the rotation of the wheel connectors (18, 19) with respect to the connector rotation axes (18a, 19a). This link (20) is a bar or rod that joins both wheel connectors (18, 19) or forks (in the case of the figure). In this way, both wheel connectors (18, 19) rotate with respect to the connector rotation axes (18a, 19a) at the same time and at the same velocity.

In the embodiment shown, the link (20) is also connected to the handlebar set (6) and transmits the rotation of the handlebar set (6) with respect to the handlebar rotation axis (6a) to the wheel connectors (18, 19), causing them to rotate with respect to the connector rotation axes (18a, 19a). In this way, the link (20) carries out the additional function of relating the rotation of the steered wheels (4, 5) to the rotation of the handlebar set (6).

In the exemplary embodiment shown in the figure, the connection between the rocker assembly (12) and the frame (2) is suspension-free and the connection between the rocker assembly (12) and the steered wheels (4, 5) is also suspension-free.

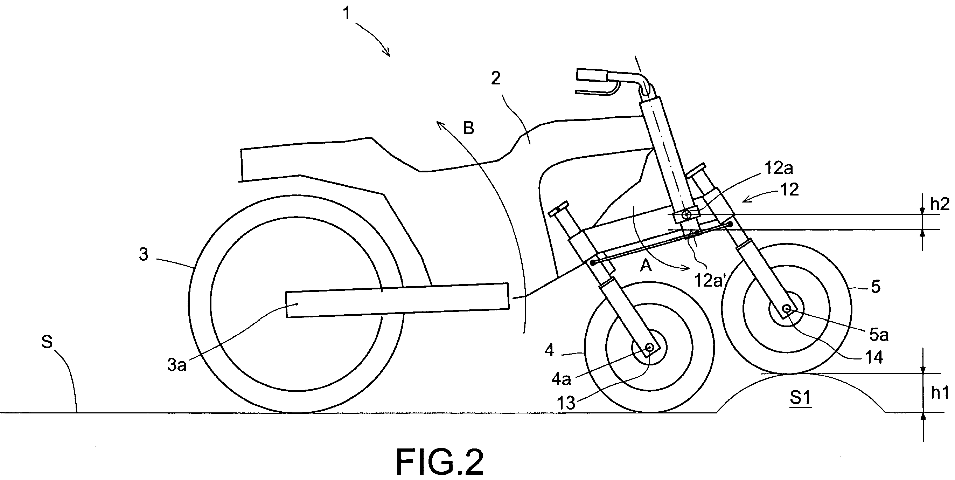

Figure 2 shows an example of the operation of the vehicle (1) of Figure 1 when it comes across a bump (S1). When the steered wheels (4, 5), particularly the front steered wheel (5) comes into contact with the bump (S1), two rotations occur in the vehicle (1) which allow all of the steered wheels (4, 5) to remain in contact with the surface (S) and the bump (S1) as can be seen in the figure. One of the rotations is that made by the rocker assembly (12) with respect to the rocker rotation axis (12a) and with respect to the frame (2). This first rotation is indicated on the diagram by arrow A. The second rotation is carried out by the frame (2), which rotates with respect to the central rotation axis (3a) of the rear wheel (3), whilst the rear wheel (3) remains in contact with the surface (3). This second rotation is indicated on the diagram by arrow B. All of the elements that are connected to the frame (2) also rotate as indicated by arrow B, including the rocker rotation axis (12a). In consequence, the rocker assembly (12) has a freedom of movement due to both simultaneous rotation effects; such a freedom of movement enables the position of the steered wheels (4, 5) to adapt to the bump (S1) and remain in contact with the surface (S). Furthermore, the figure enables one of the most important advantages of the invention to be understood, namely that part of the movement caused by ground unevenness can be absorbed. Specifically, it can be seen that the height of the bump (h1) is much greater -more than double- the height increase (h2) withstood by the rocker rotation axis (12a) from its initial position (12a') (position in Figure 1, before the front steered wheel (5) came into contact with the bump (S1)). This height reduction is due to the fact that when the rocker assembly (12) rotates in the direction of arrow A, the rear steered wheel (4) descends whilst the front steered wheel (5) rises, counteracting both vertical movements so that the rising of the rocker rotation axis (12a) is reduced.

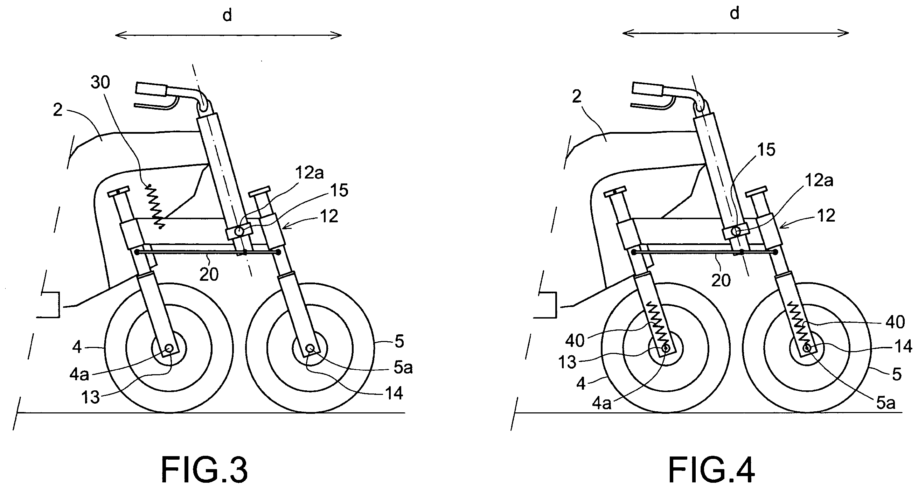

As previously mentioned, the embodiment of Figure 1 does not include a suspension mechanism between the frame (2) and the rocker assembly (12), or between the rocker assembly (12) and the steered wheels (4, 5). In this respect, the invention contemplates alternative embodiments. For example, Figure 3 shows a partial schematic side view of a second embodiment of a vehicle as per the invention, comprising a damping mechanism (30) between the rocker assembly (12) and the frame (2). This damping mechanism (30) absorbs part of the movement of the rocker assembly (12) so that this movement is cushioned on transfer to the frame (2). In another example, Figure 4 shows a partial schematic side view of a third embodiment of a vehicle as per the invention, in which the rocker assembly (12) comprises a damping mechanism (40) connected to each steered wheel (4, 5). Each damping mechanism (40) absorbs part of the movement of its corresponding steered wheel (4, 5) so that this movement is cushioned on transfer to the rocker assembly (12).

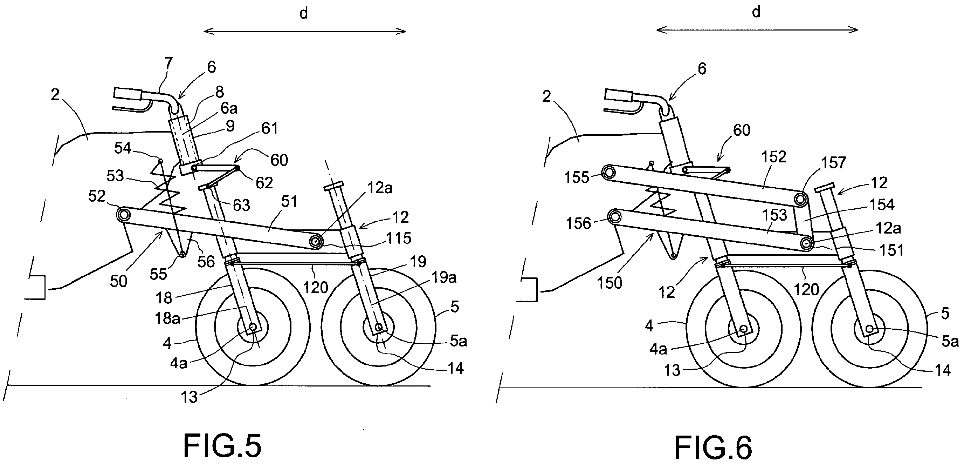

Figure 5 shows a partial schematic side view of a fourth embodiment of a vehicle which does not belong to the invention. In this case, the vehicle comprises a damping mechanism (50) between the rocker assembly (12) and the frame (2). The rocker rotation axis (12a) is provided by an articulated connection (115) between the rocker assembly (12) and this damping mechanism (50). Therefore, the rocker rotation axis (12a) has a relative position with respect to the frame (2) which varies during suspension, i.e., while the damping mechanism (50) is varying its position and degree of compression or expansion in order to absorb the movements of the rocker assembly (12). This configuration maintains cushioning between the rocker assembly (12) and the frame (2), but moves the rocker assembly (12) further away from the frame (2). By further separating the rocker assembly (12), greater freedom is obtained in the design of the geometry of the frame (2). In the embodiment shown in the figure, the damping mechanism (50) comprises a bar (51); one of the bar ends is connected to the frame (2) by means of an articulated connection (52), whilst the other end is connected to the rocker assembly (12) by means of the articulated connection (115). The movement of the bar (51) is controlled by a damper (53) that is arranged between an articulated connection (54) to the frame (2) and an articulated connection (55) to an auxiliary element (56) attached to the bar (51).

The embodiment shown in the figure, similarly to the previous embodiments, comprises a link (120) that is connected to the wheel connectors (18, 19) and that synchronizes the rotation of the wheel connectors (18, 19) with respect to the connector rotation axes (18a, 19a). However, this link (120) is not connected to the handlebar set (6) to transmit the rotation of the handlebar set (6). Instead, the vehicle comprises a transmission mechanism (60) that transmits the rotation of the handlebar set (6) with respect to the handlebar rotation axis (6a) to a wheel connector, in this case to the rear wheel connector (18), causing the rotation of the wheel connector (18) with respect to the connector rotation axis (18a), and transmitting the rotation to the rest of the wheel connectors, in this case to the front wheel connector (19) via the link (120). This prevents the steered wheels (4, 5) from suffering parasite rotation effects with respect to the connector rotation axes (18a, 19a) due to the rotation of the rocker assembly (12). The link (120) is insensitive to the rotation of the rocker assembly (12) with respect to the rocker rotation axis (12a) and is limited to synchronizing the steered rotation of the respective sets of steered wheel (4, 5) and its corresponding wheel connector (18, 19). In this specific case, the transmission mechanism (60) is a joint triangle, with a first articulated connection (61) to the lower end of the handlebar tube (8), an intermediate second articulated connection (62) and a third articulated connection (63) to the wheel connector (18).

Figure 6 shows a partial schematic side view of a fifth embodiment of a vehicle which does not belong to the invention, which is a variant of the embodiment shown in Figure 5. Similarly to the embodiment of Figure 5, the vehicle comprises a damping mechanism (150) between the rocker assembly (12) and the frame (2), whereby the rocker rotation axis (12a) provided by an articulated connection (151) between the rocker assembly (12) and this damping mechanism (150), and whereby the rocker rotation axis (12a) has a variable relative position with respect to the frame (2) during cushioning. However, in this case, the damping mechanism (150) is an articulated parallelogram, made up of two parallel bars (152, 153) and a connector piece (154) and four articulated connections: two articulated connections (155, 156) between the frame (2) and the respective ends of the parallel bars (152, 153), an articulated connection (157) between the upper parallel bar (152) and a final articulated connection between the connector piece (154) and the lower parallel bar (153), where this final articulated connection coincides with the articulated connection (151) to the rocker assembly (12). This embodiment presents the specific characteristic that, due to parallelogram kinematics, the connector piece (154) is always at the same angle with respect to the vertical position (or with a minimum rotation that can be adjusted). Therefore, the rocker assembly (12) can be provided with a rigidness or maximum rotation so that in the event of a puncture and once the maximum limit is reached, most of the load is passed onto the wheel that is not punctured.

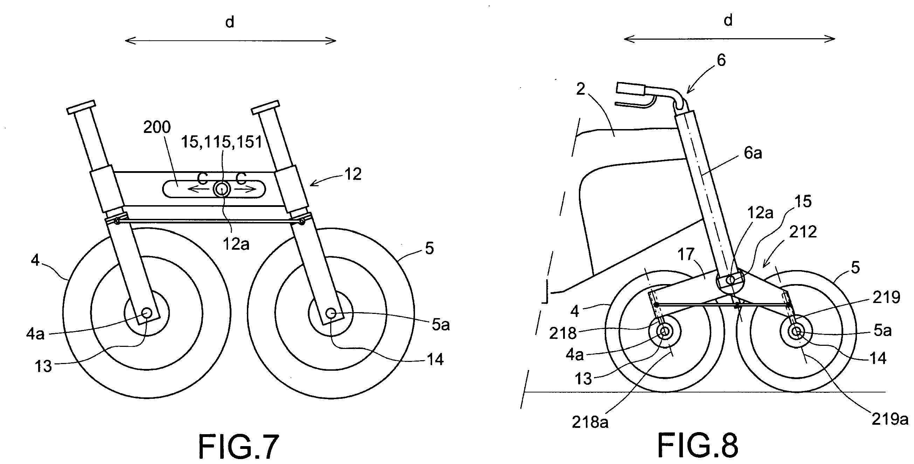

Figure 7 shows a partial schematic side view of a sixth embodiment of a vehicle as per the invention. In this embodiment, the rocker rotation axis (12a) is provided by an articulated connection -which is either provided by the articulated connection (15) between the rocker assembly (12) and the frame (2) of a vehicle which belongs to the invention (such as in Figure 1), or in an articulated connection (115, 151) between the rocker assembly (12) and a damping mechanism (50; 150) of a vehicle which does not belong to the invention (such as in Figures 4 and 5)- whose position within the rocker assembly (12) can be adjusted, for example longitudinally along a slot (200) as indicated by arrow C. This allows the load distribution to be adjusted between the steered wheels (4, 5), allowing the distribution to be set to values other than 50%/50%.

Figure 8 shows a partial schematic side view of a seventh embodiment of a vehicle as per the invention. This embodiment is similar to that of Figure 1 insofar as it has a rocker assembly (212) that swivels with respect to the frame (2). In addition, the rocker assembly (212) also has a body (217) and two wheel connectors (218, 219), whereby the wheel connectors (218, 219) are capable of rotating with respect to the body (217) in accordance with respective connector rotation axes (218a, 218b) that are parallel to the handlebar rotation axis (6a). However, in the embodiment shown in Figure 8, the rocker assembly (212) is placed vertically lower so that the rocker rotation axis (12a) is closer to the steered wheels (4, 5) and overlaps them (in accordance with the side view in the figure). Another difference is that, in the present embodiment, the body (217) is more or less V-shaped and the wheel connectors (218, 219) are not forks that embrace the wheels, but rather are positioned on one side of the steered wheels (4, 5). The rocker assembly (212) is therefore more compact, and may also be more robust and lighter. This geometry of the rocker assembly may be applied to all embodiments described up to Figure 7. Different geometry for the rocker assembly and other elements will not be ruled out provided that they fulfil the technical characteristics claimed by this invention.

Although the embodiments shown in the figures include a rear wheel in alignment with the front steered wheels, the invention is not limited to this arrangement.

It is contemplated that the articulated connections may be joints, joint parallelograms, flexible joints or any other equivalent connection mechanism that offers relative rotating kinematics between two components.

It is also contemplated that the vehicle can comprise one or more additional wheels, whereby at least one of these additional wheels is aligned with the steered wheels (4, 5).

Notwithstanding, the advantages of the invention are enhanced in those vehicles in which the steered wheels (4, 5) are front wheels, in which the vehicle is fitted with one or more rear wheels (3), and in which all of the rear wheels (3) are aligned with the front steered wheels (4, 5). In this type of vehicles, the invention mimics the experience of riding a two-wheeled vehicle, increased safety however being provided by the fact that all front steered wheels (4, 5) remain in contact with the ground at all times.

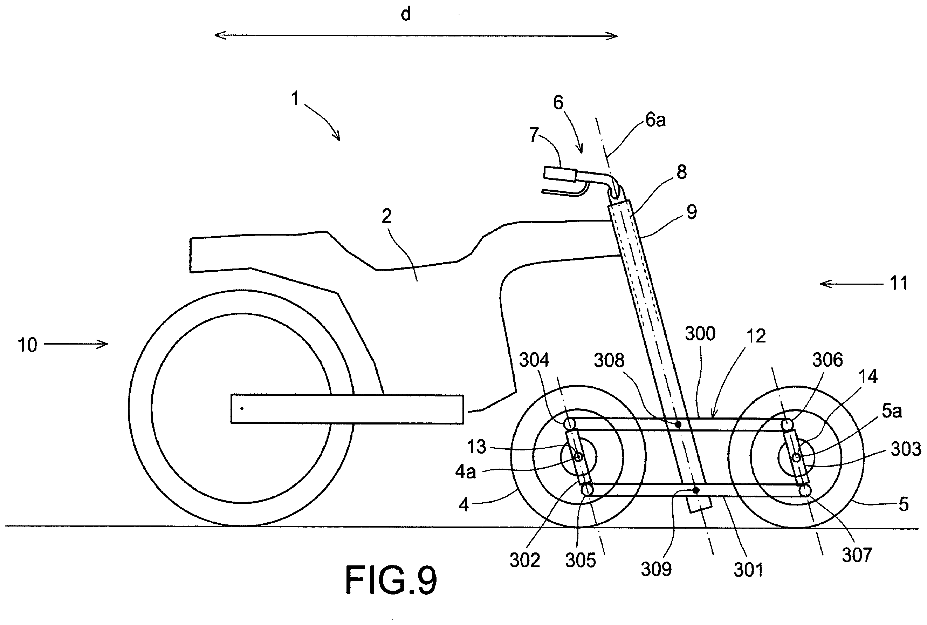

Figure 9 shows an eighth embodiment of the invention, which again consists in a vehicle (1) including a frame (2) and two steered wheels (4, 5) that are aligned relative to one another along a longitudinal direction (d) extending from a rear area (10) towards a front area (11) of the vehicle (1). Each steered wheel (4, 5) is capable of turning with respect to a respective central rotation axis (4a, 5a). As in the previous embodiments, the vehicle (1) includes a rocker assembly (12), to which the steered wheels (4, 5) are connected via a respective articulated connection (13, 14). The rocker assembly (12) is swivellable with respect to the frame (2). In addition, as in the embodiments of Figures 1, 3, 4 and 8, the rocker assembly (12) is rotatably connected to the frame (2). However, the present embodiment differs from the previous embodiment in that the rocker assembly (12) of the present embodiment is an articulated quadrilateral. The articulated quadrilateral is formed by four segments (300, 301, 302, 303). Two segments (300, 301) are arranged on a vertical plane containing the longitudinal direction (d); the other two segments (302, 303) are arranged connecting the former segments in an articulated manner; more specifically, in the embodiment shown the two segments (300, 301) are arranged along the longitudinal direction (d),are parallel relative to one another, and are equal in length; in turn, the other two segments (302, 303) are arranged parallel to the handlebar rotation axis (6a); in consequence, the articulated quadrilateral is a parallelogram. The four segments are connected by articulated connections (304, 305, 306, 307). Two articulated connections (304, 305) connect the rearmost ends of the longitudinal segments (300, 301) with one segment (302) parallel to the handlebar rotation axis (6a). The other two articulated connections (306, 307) connect the opposite ends of said longitudinal segments (300, 301) to the remaining segment (303). In turn, two additional articulated connections (308, 309) connect the segments (300, 301) to the frame (2), more specifically, to the steering tube (9). The wheels (4, 5) are connected in an articulated manner to the segments (302, 303) that are parallel to the handlebar rotation axis (6a); i.e., the articulated connections (13, 14) that provide the respective central rotation axes (4a, 5a) of the steered wheels (4, 5) are specifically arranged on said segments (302, 303) parallel to the handlebar rotation axis (6a). The present embodiment provides a special effect consisting in that each segment (302, 303) supporting a steered wheel (4, 5) presents a mainly translational movement, i.e. a movement having little or no rotational nature, in comparison to the wheel connectors (18, 19) of Figure 1, which participate jointly in the rocker assembly's rotation.

In dependence of the length of segments (300, 301, 302, 303) and of the angles thereby formed, the quadrilateral may or may not be a parallelogram. Slight differences in the segment geometry and the angles formed by the segments can provide beneficial effects in the system's dynamics, allowing to control and to adjust the movements and forces in the system during both the braking phase and the vertical displacement of the system. In the embodiment of Figure 1, the countertorque of the braking efforts is absorbed by means of a load variation of each steered wheel: the front steered wheel (5) load increases proportionally to the total braking effort, whereas the rear steered wheel (4) load decreases in a similar proportion. If the load reduction is excessive, blocking of the rear wheel (4) can take place; however, for the reasons exposed throughout this description (the fact that both steered wheels stay in contact with the ground), the support on the ground is stable and the driver has time to realize a wheel has blocked and to relax the braking intensity, blocking therefore not posing risks. In the present quadrilateral-based embodiment, both effects are made independent from one another; i.e., the vertical loads (suspension) are made independent from the horizontal loads (braking). The braking countertorque is transmitted directly to the frame (2) and is absorbed by discharging the rear train and increasing the load of the front train. The front steered wheel (4, 5) loads remain practically constant during the braking phase, guaranteeing a safe and stable braking.

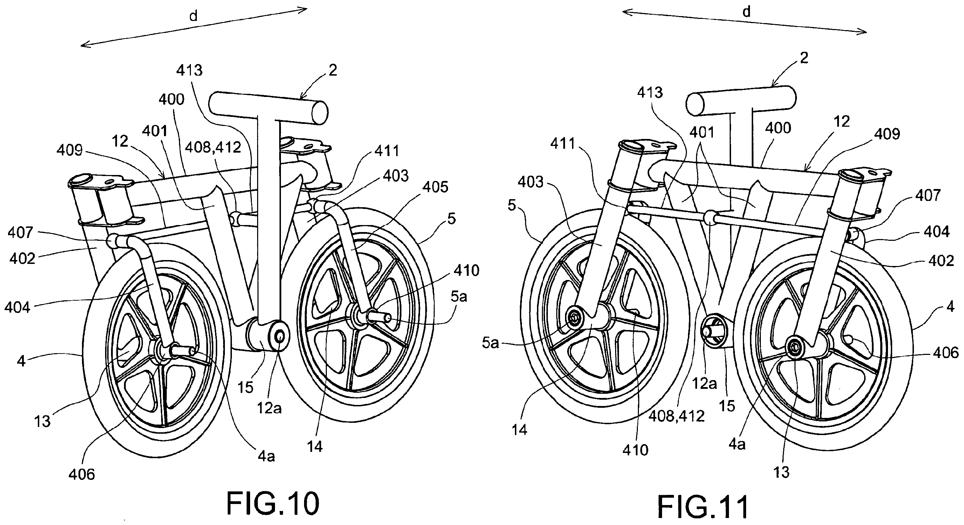

Figures 10 and 11 show two perspective views of a ninth embodiment of a vehicle which does not belong to the invention. The embodiment again comprises two or more steered wheels (4, 5) that are longitudinally aligned in a longitudinal direction (d) similarly to the previous embodiments. Each steered wheel (4, 5) is capable of turning with respect to a respective central rotation axis (4a, 5a). The vehicle frame (2) is represented by a T-shaped portion that, in turn, is connected to the rest of the frame, not shown. Similarly to previous embodiments, the present embodiment comprises a rocker assembly (12) that is swivellable with respect to the frame (2). An articulated connection (15) between the rocker assembly (12) and the frame (2) provides the rocker assembly rotation axis (12a). The steered wheels (4, 5) are connected to the rocker assembly (12) by respective articulated connections (13, 14); said articulated connections (13, 14) provide the central rotation axes (4a, 5a) of the wheels (4, 5). In the depicted embodiment, the rocker assembly (12) consists of a top longitudinal portion (400), a central V-shaped structure (401), a first wheel-supporting tube (402) and a second wheel-supporting tube (403). The vehicle further comprises two brake supports (404, 405), which in the present embodiment are two respective bars articulately connected to the respective central rotation axes (4a, 5a) of the wheels (4, 5). The brake supports (404, 405) provide a support to the caliper brakes, disc brakes or other applicable braking mechanism for reducing the rotation speed of the wheels (4, 5) relative to their central rotation axes (4a, 5a). In the present embodiment, the brake supports (404, 405) are not comprised in the rocker assembly (12), i.e., do not swivel jointly with respect to the frame (2). On the contrary, the brake supports (404, 405) move independently and differently from the rocker assembly (12). Specifically, each brake support (404, 405) forms part of a respective articulated triangle. The brake support (404) of the rear steered wheel (4) is connected in an articulated manner to said steered wheel (4) at a first articulated connection (406) that is concentric to said wheel's central rotation axis (4a). In turn, a second articulated connection (407) connects the brake support (404) to a link (409). Finally, a third articulated connection (408) connects the link (409) to the frame (2). The brake support (404), the link (409) and the three articulated connections (406, 407, 408) form a first articulated triangle. In turn, the brake support (405) of the front steered wheel (5) is connected in an articulated manner to said steered wheel (5) at a first articulated connection (410) that is concentric to said wheel's central rotation axis (5a). A second articulated connection (411) connects the brake support (405) to a link (413). Finally, a third articulated connection (412) connects the link (413) to the frame (2). The brake support (405), the link (413) and the three articulated connections (410, 411, 412) form a first articulated triangle. In addition, in the embodiment shown, the third articulated connection (408) of the first articulated triangle and the third articulated connection (412) of the second articulated triangle are constructed in a same physical articulated connection and thus share a same articulated connection rotation axis.

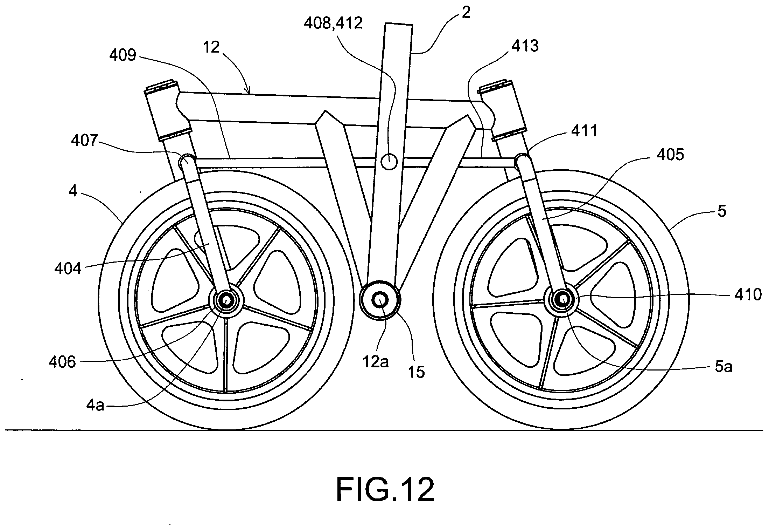

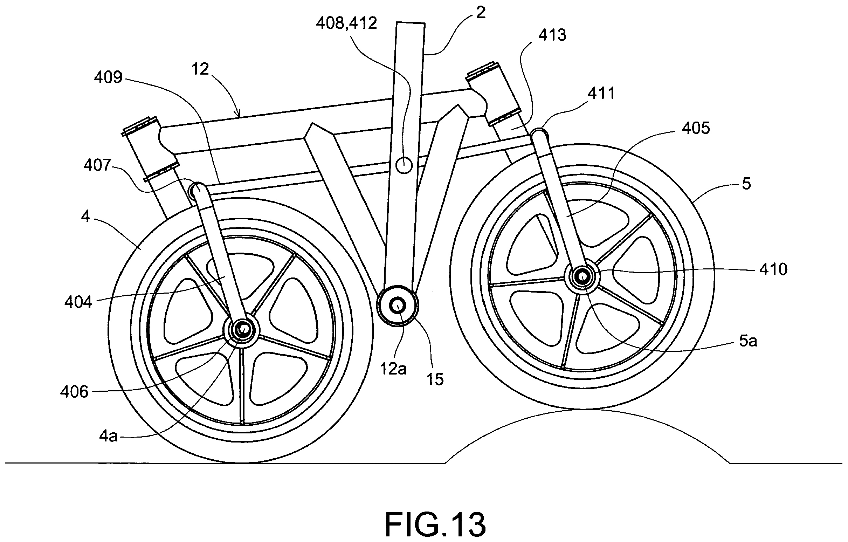

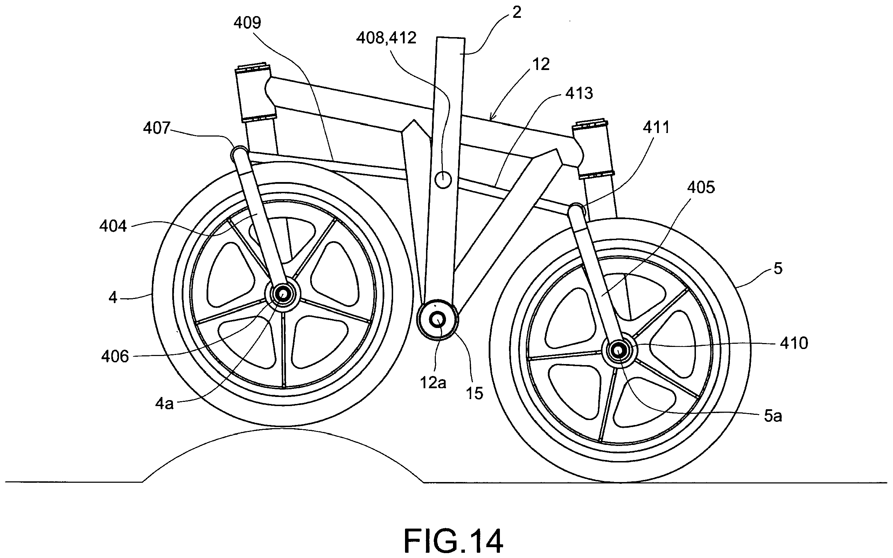

Figures 12, 13 and 14 show a sequence of operation of the present embodiment of a vehicle which does not belong to the invention. Figure 12 shows a side elevation view of the system of Figure 10 in an initial situation in which both wheels (4, 5) are vertically leveled and arranged on a flat ground, their central rotation axes (4a, 5a) in parallel alignment with the ground. The brake supports (404, 405) are arranged parallel to one another. Figure 13 shows the system in a situation in which the front steered wheel (5) is rolling over a bump and in which the rocker assembly (12) has swiveled in a counterclockwise direction. As can be observed, the articulated triangles associated to the brake supports (404, 405) have slightly rotated. The relative position of the three vertexes of each triangle has varied only slightly. In addition, the relative position of the articulated connections (410, 411, 412) has varied slightly. The brake supports (404, 405) remain parallel. Figure 14 shows the system in another situation in which the rear steered wheel (4) is rolling over a bump, and in which the rocker assembly (12) has swiveled in a clockwise direction. As can be observed, the articulated triangles associated to the brake supports (404, 405) have again rotated only slightly. The relative position of the vertexes of each triangle has slightly varied. As can be seen in Figures 13 and 14, the rocker assembly (12) has undergone a greater oscillation than the two articulated triangles and, therefore, than the two brake supports (404, 405). This means that the position of the brake supports (404, 405) with respect to the frame (2) has hardly changed, while the rocker assembly (12) and the steered wheels (4, 5) have swiveled more broadly with respect to the frame (2). Having the brake supports (404, 405) independently arranged with respect to the rocker assembly (12) provides a very minor movement of the brake supports (404, 405) in relation to the frame (2), and thus provides an extremely advantageous effect: if the brakes are operated in the situation of Figures 13 or 14, i.e., when the rocker assembly (12) has swiveled, the braking load is shared equally by both brakes, thus minimizing the risk of one wheel being less loaded and skidding.

Alternatively, the first articulated connections (406, 410) of the brake supports (404, 405) can be arranged on an intermediate area of the wheel-supporting tubes (402, 403). Such an arrangement provides a different performance, for instance in that the rear wheel becomes slightly more loaded, which may be interesting in certain cases.

## Claims

1. Vehicle (1), comprising a frame (2) and two or more steered wheels (4, 5) that are longitudinally aligned in a longitudinal direction (d) that extends from a rear area (10) towards a front area (11) of the vehicle (1), wherein each steered wheel (4, 5) is capable of turning with respect to a respective central rotation axis (4a, 5a), wherein the vehicle (1) further comprises:
- a rocker assembly (12), to which each steered wheel (4, 5) is connected via a respective articulated connection (13, 14) which provides the respective central rotation axis (4a, 5a), wherein said rocker assembly (12) is swivellable with respect to the frame (2) around a rocker rotation axis (12a) that is provided by an articulated connection (15) between the rocker assembly (12) and the frame (2), wherein the rocker rotation axis (12a) is parallel to the central rotation axes (4a, 5a) of the steered wheels (4, 5), providing the rocker assembly (12) and the steered wheels (4, 5) with a joint swivelled movement on a plane that is perpendicular to the central rotation axes (4a, 5a) of the steered wheels (4, 5), wherein
- the vehicle (1) further comprises a handlebar set (6) capable of turning around a handlebar rotation axis (6a), wherein the vehicle (1) is **characterized in that**: the rocker rotation axis (12a) intersects the handlebar rotation axis (6a).

2. Vehicle (1), in accordance with claim 1, wherein the connection between the rocker assembly (12) and the frame (2) and the connection between the rocker assembly (12) and the steered wheels (4, 5) are suspension-free.

3. Vehicle (1), in accordance with claim 1, further comprising a damping mechanism (30) between the rocker assembly (12) and the frame (2).

4. Vehicle (1), in accordance with claim 1, wherein the rocker assembly (12) comprises a damping mechanism (40) connected to the steered wheels (4, 5).

5. Vehicle (1), in accordance with claim 1, wherein the rocker assembly (12) comprises a body (17) to which two wheel connectors (18, 19) are connected, wherein said two wheel connectors (18, 19) are rotatable with respect to the body (17) in accordance with respective connector rotation axes (18a, 19a) that are parallel to the handlebar rotation axis (6a).

6. Vehicle (1), in accordance with claim 5, wherein the rocker assembly (12) further comprises a link (20) that is connected to the wheel connectors (18, 19) and that is adapted to synchronize the rotation of the wheel connectors (18, 19) with respect to the connector rotation axes (18a, 19a).

7. Vehicle (1), in accordance with claim 6, wherein the link (20) is also connected to the handlebar set (6) and is adapted to transmit the rotation of the handlebar set (6) with respect to the handlebar rotation axis (6a) to the wheel connectors (18, 19), so as to cause said wheel connectors (18, 19) to rotate with respect to the connector rotation axes (18a, 19a).

8. Vehicle (1), in accordance with claim 1, wherein the rocker rotation axis (12a) is provided by an articulated connection (15) whose position within the rocker assembly (12) is adjustable.

9. Vehicle (1), in accordance with claim 1, further comprising one or more additional wheels, wherein at least one of these additional wheels is aligned with the steered wheels (4, 5).

10. Vehicle (1), in accordance with claim 1, wherein the steered wheels (4, 5) are front wheels, the vehicle further comprising one or more rear wheels (3), wherein all the rear wheels (3) are aligned with the front steered wheels (4, 5).

11. Vehicle (1), in accordance with claim 1, wherein the rocker assembly (12) comprises an articulated quadrilateral that comprises two first segments (300, 301) arranged on a vertical plane including the longitudinal direction (d) and two segments (302, 303) that are connected in an articulated manner to said first segments (300, 301), wherein the articulated connections (13, 14) between the steered wheels (4, 5) and the rocker assembly (12) are carried out between the steered wheels (4, 5) and said segments (302, 303) that are connected in the articulated manner to said first segments (300, 301).

## Patentansprüche

1. Fahrzeug (1), das einen Rahmen (2) und zwei oder mehrere gelenkte Räder (4, 5) umfasst, die längs angeordnet und in Längsrichtung (d) ausgerichtet sind, die von einem hinteren Bereich (10) zu einem vorderen Bereich (11) des Fahrzeugs (1) verläuft, wobei jedes gelenkte Rad (4, 5) in der Lage ist, sich gegenüber einer entsprechenden zentralen Rotationsachse (4a, 5a) zu drehen, und das Fahrzeug (1) außerdem Folgendes umfasst:
- ein Kipphebelgestell (12), mit dem jedes gelenkte Rad (4, 5) durch eine entsprechende Gelenkverbindung (13, 14) verbunden ist, die die entsprechende zentrale Rotationsachse (4a, 5a) bildet, wobei besagtes Kipphebelgestell (12) gegenüber dem Rahmen (2) rund um eine Kipphebelachse (12a) schwenkbar ist, die von einer Gelenkverbindung (15) zwischen dem Kipphebelgestell (12) und dem Rahmen (2) hergestellt wird, wobei die Kipphebelachse (12a) parallel zu den zentralen Rotationsachsen (4a, 5a) der gelenkten Räder (4, 5) verläuft und dabei für eine gemeinsame Schwenkbewegung des Kipphebelgestells (12) und der gelenkten Räder (4, 5) auf einer Ebene sorgt, die senkrecht zu den zentralen Rotationsachsen (4a, 5a) der gelenkten Räder (4, 5) verläuft, wobei
- das Fahrzeug (1) ferner einen Lenkstangen-Satz (6) umfasst, der in der Lage ist, sich rund um eine Lenkstangen-Rotationsachse (6a) zu drehen, wobei das Fahrzeug (1) **dadurch gekennzeichnet ist, dass** die Kipphebelachse (12a) sich mit der Lenkstangen-Rotationsachse (6a) kreuzt.

2. Fahrzeug (1) gemäß Anspruch 1, wobei die Verbindung zwischen dem Kipphebelgestell (12) und dem Rahmen (2) und die Verbindung zwischen dem Kipphebelgestell (12) und den gelenkten Rädern (4, 5) ungefedert ist.

3. Fahrzeug (1) gemäß Anspruch 1, das ferner einen Dämpfungsmechanismus (30) zwischen dem Kipphebelgestell (12) und dem Rahmen (2) umfasst.

4. Fahrzeug (1) gemäß Anspruch 1, wobei das Kipphebelgestell (12) einen Dämpfungsmechanismus (40) umfasst, der mit den gelenkten Rädern (4, 5) verbunden ist.

5. Fahrzeug (1) gemäß Anspruch 1, wobei das Kipphebelgestell (12) einen Körper (17) umfasst, mit dem zwei Radanschlüsse (18, 19) verbunden sind, wobei besagte zwei Radanschlüsse (18, 19) gegenüber dem Körper (17) rotierbar sind, in Übereinstimmung mit den entsprechenden Anschluss-Rotationsachsen (18a, 19a), die parallel zu der Lenkstangen-Rotationsachse (6a) sind.

6. Fahrzeug (1) gemäß Anspruch 5, wobei das Kipphebelgestell (12) außerdem ein Bindeglied (20) umfasst, das mit den Radanschlüssen (18, 19) verbunden ist, und das dafür geeignet ist, die Rotation der Radanschlüsse (18, 19) gegenüber den Anschluss-Rotationsachsen (18a, 19a) zu synchronisieren.

7. Fahrzeug (1) gemäß Anspruch 6, wobei das Bindeglied (20) auch mit dem Lenkstangen-Satz (6) verbunden ist und dafür geeignet ist, die Rotation des Lenkstangen-Satzes (6) gegenüber der Lenkstangen-Rotationsachse (6a) auf die Radanschlüsse (18, 19) zu übertragen, so dass die Rotation besagter Radanschlüsse (18, 19) gegenüber den Anschluss-Rotationsachsen (18a, 19a) ausgelöst wird.

8. Fahrzeug (1) gemäß Anspruch 1, wobei die Rotationsachse des Kipphebels (12a) durch eine Gelenkverbindung (15) hergestellt wird, deren Position innerhalb des Kipphebelgestells (12) verstellbar ist.

9. Fahrzeug (1) gemäß Anspruch 1, das ferner eines oder mehrere zusätzliche Räder umfasst, wobei mindestens eines dieser zusätzlichen Räder auf die gelenkten Räder (4, 5) ausgerichtet ist.

10. Fahrzeug (1) gemäß Anspruch 1, wobei die gelenkten Räder (4, 5) Vorderräder sind, und das Fahrzeug ferner eines oder mehrere Hinterräder (3) umfasst, wobei alle Hinterräder (3) auf die vorderen gelenkten Räder (4, 5) ausgerichtet sind.

11. Fahrzeug (1) gemäß Anspruch 1, wobei das Kipphebelgestell (12) ein Viereck mit Gelenken umfasst, das zwei erste Abschnitte (300, 301) umfasst, welche auf einer senkrechten Ebene angeordnet sind, die die Längsrichtung (d) einschliesst, und zwei Abschnitte (302, 303), die durch Gelenke mit besagten ersten Abschnitten (300, 301) verbunden sind, wobei die Gelenkverbindungen (13, 14) zwischen den gelenkten Rädern (4, 5) und dem Kipphebelgestell (12) zwischen den gelenkten Rädern (4, 5) und besagten Abschnitten (302, 303) hergestellt werden, welche durch Gelenke mit besagten ersten Abschnitten (300, 301) verbunden sind.

## Revendications

1. Véhicule (1) comprenant un châssis (2) et deux roues motrices (4, 5) ou plus qui sont alignées dans le sens de la longueur (d) et s'étendent entre une partie arrière (10) et une partie avant (11) du véhicule (1), où chaque roue motrice (4, 5) est capable de tourner par rapport à un axe central de rotation (4a, 5a), où le véhicule (1) comprend ensuite:
- un ensemble basculant (12) auquel chaque roue motrice (4, 5) est connectée par un raccord articulé (13, 14) respectif qui fournit l'axe de rotation central (4a, 5a) respectif, où ledit ensemble basculant (12) peut pivoter par rapport au châssis (2) autour d'un axe de rotation du basculant (12a) qui est fourni par un raccord articulé (15) entre l'ensemble basculant (12) et le châssis (2), où l'axe de rotation du basculant (12a) est parallèle aux axes de rotation centraux (4a, 5a) des roues motrices (4, 5), fournissant à l'ensemble basculant (12) et aux roues motrices (4, 5) un mouvement pivotant conjoint sur un plan perpendiculaire aux axes centraux de rotation (4a, 5a) des roues motrices (4, 5), où
- le véhicule (1) comprend en autre un jeu de guidon (6) capable de tourner autour d'un axe de rotation de guidon (6a), où
le véhicule (1) est **caractérisé par le fait que**:
l'axe de rotation du basculant (12a) fait intersection avec l'axe de rotation du guidon (6a).

2. Véhicule (1), conformément à la revendication 1, où le raccord entre l'ensemble basculant (12) et le châssis (2) et le raccord entre l'ensemble basculant (12) et les roues motrices (4, 5) sont sans suspension.

3. Véhicule (1), conformément à la revendication 1, comprenant également un mécanisme amortisseur (30) entre l'ensemble basculant (12) et le châssis (2).

4. Véhicule (1) conformément à la revendication 1, où l'ensemble basculant (12) comprend un mécanisme amortisseur (40) relié aux roues motrices (4, 5).

5. Véhicule (1) conformément à la revendication 1, où l'ensemble basculant (12) comprend un corps (17) à lequel sont connectés deux connecteurs de roues (18, 19), où lesdits connecteurs de roue (18, 19) peuvent tourner par rapport à le corps (17) en fonction des axes de rotation du connecteur (18a, 19a) respectifs qui sont parallèles à l'axe de rotation de guidon (6a).

6. Véhicule (1) conformément à la revendication 5, où l'ensemble basculant (12) comprend ensuite une liaison (20) qui est reliée aux connecteurs de roue (18, 19) et qui est adaptée pour synchroniser la rotation des connecteurs de roue (18, 19) par rapport aux axes de rotation de connecteur (18a, 19a).

7. Véhicule (1) conformément à la revendication 6, où la liason (20) est également connectée au guidon (6) et adaptée pour transmettre la rotation du guidon (6) par rapport à l'axe de rotation de guidon (6a) aux connecteurs de roue (18, 19) pour que lesdits connecteurs de roue (18, 19) tournent par rapport aux axes de rotation du connecteur (18a, 19a).

8. Véhicule (1), conformément à la revendication 1, où l'axe de rotation du basculant (12a) est muni d'une connexion articulée (15) dont la position dans l'ensemble basculant (12) est réglable.

9. Véhicule (1) conformément à la revendication 1, comprenant également une ou plusieurs roues supplémentaires, où au moins une des roues supplémentaires est alignée avec les roues motrices (4, 5).

10. Véhicule (1) conformément à la revendication 1, où les roues motrices (4, 5) sont des roues avant, le véhicule comprenant également une ou plusieurs roues arrières (3), où toutes les roues arrières (3) sont alignées par rapport aux roues motrices avant (4, 5).

11. Véhicule (1) conformément à la revendication 1, où l'ensemble basculant (12) comprend un quadrilatère articulé qui comprend deux premiers segments (300, 301) disposés sur un plan vertical comprenant le sens longitudinal (d) et deux segments (302, 303) qui sont connectés de manière articulée aux premiers segments (300, 301), où les raccords articulés (13, 14) entre les roues motrices (4, 5) et l'ensemble basculant (12) sont situés entre les roues motrices (4, 5) et lesdits segments (302, 303) qui sont reliés de manière articulée aux premiers segments (300, 301).
